# EUROPEAN PATENT APPLICATION

(11) **EP 4 239 543 A1**
(43) Date of publication of application: **06.09.2023**
(21) Application number: 22160687.4
(22) Date of filing: 08.03.2022
(51) Int. Cl.: G06Q 10/06

(54) **PROJECT MANAGEMENT SYSTEM AND RESPECTIVE METHOD OF OPERATION**

(30) Priority: 02.03.2022 PT 2022117833
(71) Applicant: DRT Rapid - Protótipos e Moldes Lda, 2415-314 Leiria (PT); DRT Advance, S.A., 2415-314 Leiria (PT)
(72) Inventor: PAULO DUARTE, Valdemar Manuel, 2415-314 Leiria (PT)
(74) Representative: do Nascimento Gomes, Rui

(57) **Abstract**

It is disclosed a project management system, providing that a project and all the tasks associated with it are mapped in time, and their schedule is updated throughout the execution period of each task, depending on the monitoring of task parameters.

## Description

### FIELD OF THE INVENTION

The present invention falls within the area of project management systems.

### PRIOR ART

A project is defined as a set of tasks, which can be sequential or without a specific order, being carried out to achieve a certain purpose or objective. A project can be implemented in the context of any field of technology, however, it plays a prominent role in engineering areas as it typically involves a high number of unstandardized and variable tasks and resources.

State-of-the-art project management systems already allow the entire project and respective tasks to be mapped in time. However, these systems prove to be inefficient when there is a special need for updating the initial mapping arrangement in view of unforeseen occurrences of different natures that may happen during the execution time of the project and which have an impact on the execution of each task.

This disclosure is directed towards an optimized solution in relation to the state of the art systems.

### SUMMARY OF THE INVENTION

Thus, the object of the present invention is a project management system. This solution provides that a project and all the tasks associated with it are mapped in time, and their schedule is updated throughout the execution period of each task, depending on the monitoring of task parameters.

In this way, the execution period of a project, defined by a starting date and a finishing date, can be adapted to unforeseen events that may occur, ensuring the correct time adjustment or ordering of its tasks.

For this purpose, the system of the present disclosure is comprised by:
- a computational unit, comprised by computational means configured to implement at least:
   - a project planning module, in which each project is comprised of at least one task, each task having an expected execution period, defined by a starting time and by a finishing time, and it comprises at least one task parameter;
   - a time management module;
- a sensory unit comprising sensor means adapted to monitor at least one task parameter throughout the period of execution of a task.

More particularly, the project planning module is programmed to configure a starting date and a finishing date, defining an expected execution period for at least one project, depending on the expected execution period of each task of said project. In turn, the time management module is programmed to update the task's starting and finishing time, defining a real execution period of at least one task, as a function of at least one task parameter monitored by the sensory unit. In a particular embodiment, the real execution period of a project can be defined as a function of the real execution period of each task of the project.

It is also the object of this disclosure a method to operate the project management system developed. Said method comprises the following steps:
- setting a starting date and a finishing date for at least one project;
- setting a starting time and a finishing time for at least one task; each task having an expected execution period, defined by a starting time and a finishing time and having associated at least one task parameter;
- monitoring of at least one task parameter;
- updating the starting and/or finishing times, defining a real execution period, of at least one task, as a function of at least one monitored task parameter.

### DESCRIPTION OF FIGURES

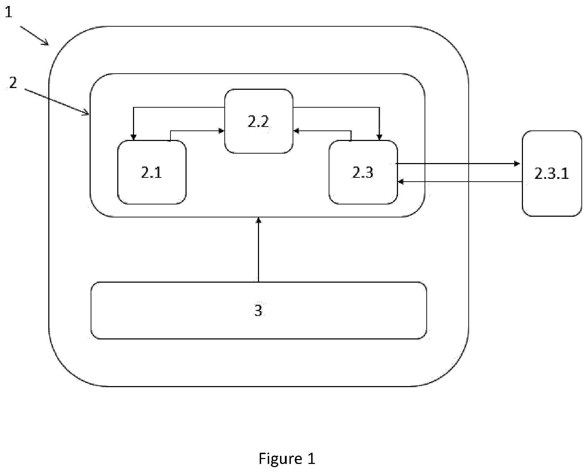

Figure 1 - representation of an embodiment of the project management system of the present disclosure. The Reference numbers represent:
   1 - Project management system;
   2 - Computational unit;
      2.1 - Project planning module;
      2.2 - Time management module;
      2.3 -Task resources module;
         2.3.1 -Task resources database;
   3 - Sensory unit.

### DETAILED DESCRIPTION

The more general and advantageous configurations of the present invention are described in the Summary of the invention. Such configurations are detailed below in accordance with other advantageous and/or preferred embodiments of implementation of the present invention.

The project management system (1), object of this disclosure, aims to allow updating the scheduling of tasks in execution, based on task parameters, which are monitored in real time, during the execution of a project's task. In this disclosure, it is understood that a project is defined by at least one task to be executed by a task operator.

This objective is achieved through the centralization of all data referring to the execution of a project, in particular referring to the execution of each task associated with it, allowing, after its correct processing, to optimize the execution performance of each task according to, exclusively, parameters that are associated with the execution of the task and that can influence it.

The project planning module (2.1) has the function of scheduling the starting and finishing data of each project and, respectively, the starting and finishing time of each task to be carried out in the context of the project. In this context, the initial configuration of a starting and finishing times defines an expected execution period for a task, that is, the period of time the task is expected to be completed. Additionally, throughout the execution period of a project, a continuous monitorization of the parameters related with the execution of a task, allows to update the starting and finishing times of the tasks to be executed, defining a real execution period for said task that can be used to better estimated the real execution period of a project.

The project planning module (2.1) is able to schedule the execution of a plurality of projects, each of them comprising a plurality of tasks, which can be shared between the different projects. In the context of a plurality of projects to be executed simultaneously and that share the execution of certain tasks among themselves, this system presents itself as particularly advantageous, since it allows the centralization of information, that is, information extracted from monitoring the parameters of the tasks in progress, that has the advantage of providing standardization of operations, allowing for a more effective control of the real execution period of each task and the project execution period itself.

The time management module (2.2) is responsible for processing the sensory information collected through the sensory unit (3), which is related to the task parameters of a task, and for the subsequent updating of its starting and/or finishing times in case of need. Updating the starting and/or finishing times of a task can be materialize in a change of the order of a task, in relation to the order defined by the project planning module (2.1), or in the reduction or increase of the expected execution period of a task.

The sensory unit (3) comprises sensory means adapted to monitor task parameters throughout the execution of a task. The sensory means employed can be any of the state of the art that are adapted to monitor said parameters.

In a preferred embodiment of the system (1) of the present disclosure, a task parameter is related to at least the following parameters: task status and at least one task resource; additionally, a task parameter may also relate to the task operator, that is the person or persons (e.g. an employee) responsible for executing the task or a part of the task. In another preferred embodiment of the present disclosure, the task parameter "task status" has at least three states: "pending", when the task has not yet started; "ongoing" while the task is being executed; "interrupted", while the task is paused and "completed", when the task's execution period is finished.

In a preferred embodiment of the system (1) of the present disclosure, the task resource comprises at least one type of task resource and its respective quantity. In particular, the task resource can be of at least the following types:
- of a material type, that is, being related to the raw material needed for the task in question to be performed; or
- of a equipment type, that is, referring to equipment or any type of machinery that is needed to perform a task or part of a task; or
- of a labor type, referring to a minimum number of workers needed to implement a task or part of a task.

In a preferred embodiment of the system (1) of the present disclosure, the computational means of the computational unit (2) are further configured to implement a task resources module (2.3). Said module (2.3) is adapted to interact with at least one task resources database (2.3.1) comprising at least one list of task resources. In another embodiment, the list of task resources comprises information relating to at least one type of task resource available and its respective quantity. Thus, using the task resources module (2.3), it is possible to achieve an optimization of task resources, depending on the different tasks that may be executed and depending on the starting and finishing times of each one of them. In an alternative aspect of the present disclosure, the task resources database (2.3.1) may be integrated in the system (1), which may comprise the storage capacity required for this purpose, or alternatively, said database (2.3.1) may be external to the system, being accessed through, for example, a communication network.

In a preferred embodiment of the system (1) of the present disclosure, the time management module (2.2) is adapted to interact with the task resources module (2.3) and configured to define the task parameter "task status" depending on the type of task resource available and its available quantity.

In a preferred embodiment of the system (1) of the present disclosure, a task parameter additionally concerns to geographic location data. In another embodiment, the sensory unit (3) is adapted to monitor the geographic location of task resources. Furthermore, the list of task resources of the task resources database (2.3.1) comprises information about the geographic location of each available task resource. More particularly, the time management module (2.2) is adapted to interact with the task resources module (2.3) and is configured to set the task parameter "task status" as a function of the geographical location of the task, i.e., where the task is to be executed, and the geographical location of the type of task resource available. In this way, it is possible to optimize the task resources available at a given time and in the location where the task is to be executed.

In a preferred embodiment of the system (1) of the present disclosure, the time management module (2.2) is configured to estimate the starting time and/or the finishing time, defining an expected execution period of at least one task, as a function of at least one task parameter monitored by the sensory unit (3).

In a preferred embodiment of the system (1) of the present disclosure, the time management module (2.2) is configured to update the starting time and/or the finishing time, defining a real execution period of at least one task of a project.

In a preferred embodiment of the system (1) of the present disclosure, the time management module (2.2) is configured to update the starting date and/or the finishing date of a project, defining a real execution period of the project, as a function of the real execution period of at least one project task.

The method of operation of the described project management system (1) is also the object of this disclosure.

In a preferred embodiment of the method of the present disclosure, the step of monitoring at least one task parameter is performed throughout the execution period of a task, and wherein a task parameter is related to at least the following parameters: task status, and at least one task resource; additionally, a task parameter may also relate to the task operator, that is the person or persons (e.g. an employee) responsible for executing the task or a part of the task. In turn, the task resource comprises at least one type of task resource and its respective quantity. Particularly, the task resource being at least of the type: material, i.e., raw material used to perform a task; equipment adapted to perform a task or part of a task; or labor, referring to a minimum number of workers needed to implement a task or part of a task.

In a preferred embodiment of the method of the present disclosure, it further comprises the step of:
estimating the starting time and/or the finishing time, defining an expected execution period of at least one task of a project, as a function of at least one monitored task parameter;
and
updating the starting time and/or the finishing time, defining a real execution period of at least one task of the project, depending on the estimation performed; and
updating the starting date and/or the finishing date, defining a real execution period of a project as a function of a real execution period of at least one task of the project.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A project management system (1) comprising:
- a computational unit (2) comprising computational means configured to implement at least:
- a project planning module (2.1); each project being comprised by at least one task, each task having an expected execution period, defined by a starting time and by a finishing time, and being comprised by at least one task parameter;
- a time management module (2.2);
- a sensory unit (3) comprising sensory means adapted to monitor at least one
task parameter throughout a task execution period, wherein,
the project planning module (2.1) is programmed to configure a starting date and a finishing date for at least one project, depending on the expected execution period of each task of the project; and
the time management module (2.2) is programmed to update the starting time and/or the finishing time, defining a real execution period of at least one task of a project, as a function of at least one task parameter monitored by the sensory unit (3).

2. System (1) according to claim 1, wherein a task parameter is related to at least the following parameters: task status, and at least one task resource; optionally, a task parameter further relates to a task operator responsible for executing a task or a part of a task.

3. System (1) according to claim 2, wherein the task parameter "task status" has at least three states:
"pending", **when the task is not yet** in execution;
"ongoing" **while the task is** being executed;
**"interrupted" while the task is paused**
and
**"completed" when the task's execution** period is finished.

4. System (1) according to claim 2 or 3, wherein the task resource includes at least one type of task resource and its respective quantity; the task resource being at least of the type:
material, i.e., raw material used to perform a task;
equipment, i.e., the equipment adapted to perform a task or part of a task;
labor, i.e., a minimum number of workers needed to implement a task or part of a task.

5. System (1) according to any of claims 2 to 4, wherein the computational means of the computational unit (2) are further configured to implement a task resources module (2.3); said module (2.3) being adapted to interact with at least one task resources database (2.3.1) comprising at least one list of task resources.

6. System (1) according to claims 4 and 5, wherein the list of task resources comprises information relating to at least one type of task resource available and its respective quantity.

7. System (1) according to claims 3 to 6, wherein the time management module (2.2) is adapted to interact with the task resources module (2.3) and configured to define the task parameter "task status" depending on the type of task resource available and the respective quantity.

8. System (1) according to claim 2, wherein a task parameter is additionally related to a geographic location data.

9. System (1) according to claims 3 to 6 and 8, wherein the sensory unit (3) is adapted to monitor the geographic location of task resources; and wherein the list of task resources of a task resources database (2.3.1) further comprises information about the geographic location of each available task resource; and wherein
the time management module (2.2) is adapted to interact with the task resources module (2.3) and is **configured to define the task parameter "task status"** depending on the geographical location of the task and the geographical location of the type of task resource available and its respective quantity.

10. System (1) according to any of the preceding claims, wherein the time management module (2.2) is configured to estimate the starting time and/or the finishing time, defining an expected execution period of at least one task, as a function of at least one task parameter monitored by the sensory unit (3).

11. System (1) according to claim 10, wherein the time management module (2.2) is configured to update the starting time and/or the finishing time, defining a real execution period of at least one task of a project.

12. System (1) according to claims 1 or 11, wherein the time management module (2.2) is configured to update the starting date and/or the finishing date, defining a real execution period of a project as a function of the real execution period of at least one task of the project.

13. Method of operating the project management system (1) of claims 1 to 12, comprising the following steps:
- setting a starting date and a finishing date for at least one project;
- setting a starting time and a finishing time for at least one task; each task having an expected execution period, defined by a starting time and a finishing time and having associated at least one task parameter;
- monitoring of at least one task parameter;
- updating the starting and/or finishing times, defining a real execution period of at least one task, as a function of at least one monitored task parameter.

14. Method according to claim 13, wherein the step of monitoring at least one task parameter is carried out throughout the period of execution of a task, and wherein
a task parameter is related to at least the following parameters: task status, and, at least one task resource; optionally, a task parameter further relates to a task operator responsible for executing a task or a part of a task; and
the task resource comprises at least one type of task resource and its respective quantity; the task resource being at least of the type:
material, i.e., raw material used to perform a task;
equipment, i.e., the equipment adapted to perform a task or part of a task;
labor, i.e., a minimum number of workers needed to implement a task or part of a task.

15. Method according to claim 13 or 14, further comprising the step of:
estimating the starting time and/or the finishing time, defining an expected execution period of at least one task of a project, as a function of at least one monitored task parameter;
and
updating the starting time and/or the finishing time, defining a real execution period of at least one task of the project, depending on the estimation performed; and
updating the starting date and/or the finishing date, defining a real execution period of a project as a function of the real execution period of at least one task of the project.
